# EUROPEAN PATENT SPECIFICATION

(11) **EP 2 303 625 B1**
(45) Date of publication and mention of the grant of the patent: **10.04.2013**
(21) Application number: 09754120.5
(22) Date of filing: 01.06.2009
(51) Int. Cl.: B60K 15/04

(54) **FLUID PASSAGEWAY CLOSURE MEANS**
FLUIDKANALVERSCHLUSSMITTEL
MOYENS DE FERMETURE DE PASSAGE DE FLUIDE

(30) Priority: 30.05.2008 GB 0809939
(43) Date of publication of application: 06.04.2011
(73) Proprietor: Sleeman, Paul, Kingswood Surrey KT20 6PS (GB)
(72) Inventor: SLEEMAN, Paul, Kingswood Surrey KT20 6PS (GB)
(74) Representative: Bridge-Butler, Jeremy
(86) International application number: PCT/GB2009/001359
(87) International publication number: WO 2009/144475

(56) References cited:
- EP-A- 1 262 355
- EP-A- 1 690 727
- DE-U1-202005 004 189
- DE-U1-202007 004 208
- US-B1- 6 302 169
- US-B1- 6 968 874

## Description

This invention relates to fluid passageway closure means, for use particularly, but not exclusively, to close the fuel tank inlets of diesel motor vehicles.

Most modern vehicles run on either petrol or diesel fuel, with the majority still using petrol. These two fuels are not interchangeable, and use of the wrong one can cause serious damage to a petrol or a diesel engine.

In order to prevent motorists from filling their vehicles with the wrong type of fuel, fuel companies use pumps with different sized nozzles. In particular, the nozzles of diesel pumps are larger in diameter than their petrol equivalents, and cannot be fitted into the fuel tank inlets of petrol vehicles. Diesel nozzles are 25mm in diameter and petrol nozzles are 20mm in diameter.

However, as the nozzles of petrol pumps are smaller than diesel ones, it is still possible to place a petrol pump nozzle into the fuel tank inlet of a diesel vehicle.

In the past this arrangement did not cause too many problems because diesel vehicles were unrefined and fairly rare. The users of such vehicles did not tend to confuse them for petrol vehicles.

However, modern diesel motor vehicles are now growing in popularity, and they are so refined that it can be difficult to tell them apart from petrol versions. As such, it has become quite common for users to accidentally fill their diesel vehicles with petrol. If a diesel engine is run with petrol it can cause serious damage, which is very time consuming and costly to repair. If the mistake is realised before the engine is run, it is still an awkward and time consuming exercise to drain the tank and fuel lines of petrol.

EP1262355, in the name of Bayerische Motoren Werke, discloses a vehicle fuel tank filler neck provided with a check flap, the opening and closing of which is controlled by one or more spring loaded check hooks. These check hooks extend into a throat section of the filler neck, and are movable between a lock position in which they lock the check flap in a closed position, and a release position in which they allow the check flap to move to an open position, Lateral outward depression of each of the check hooks is only possible by insertion into the throat section of a diesel fuel nozzle, Insertion of a narrower petrol fuel nozzle does not laterally outwardly depress the check hooks, so the check flap cannot be opened.

EP1690727 in the name of STANT MANUFACTURING, US6968874 in the name of GABBEY, and DE202007004208 in the name of MAGNA STEYR all disclose vehicle fuel tanks with the same general concept as described above.

These documents all describe vehicle fuel tanks with integrated check flaps. These suffer the drawback that they cannot be readily retro-fitted to an existing diesel powered vehicle. US6302169 in the name of PULOS discloses the same general concept as described above, but this time as part of a device for retro-fitting to an existing diesel powered vehicle. The device has an annular groove for receiving a lip of a filler pipe in order to be fitted thereto, and there is a screw thread for receiving a separate end cap. However, this construction is very basic and suffers from a number of drawbacks. Firstly, the manner in which the device is fitted to the filler pipe is not secure, and in fact most existing diesel filler pipes are of a different construction to as shown, so would not function with the disclosed device. In addition, the screw thread for receiving the end cap is axially displaced from the throat section where the check flap is located, which results in the axial length of the device being too great to fit under the outer filler door of most existing diesel powered vehicles.

The present invention is intended to overcome some of the above problems.

Therefore, according to the present invention fluid passageway closure means comprises a throat section, a door and a plurality of lock arms, in which the throat section comprises an aperture at a first end thereof, in which the door is mounted over said aperture and is movable between a closed position and an open position, in which the door is spring loaded into said closed position, in which the lock arms are mounted to said throat section and are movable between a lock position in which they lock the door in said closed position, and a release position in which they allow the door to move to said open position, in which each lock arm is biased into the lock position, in which each lock arm is provided with a trigger portion extending laterally inwardly into the throat section, in which lateral outward depression of each trigger portion moves that lock arm from the lock position to the release position, and in which the trigger portions are spaced about the throat section such that simultaneous lateral outward depression of all the trigger portions is only possible by insertion into the throat section in use of a probe means of pre-determined outer dimensions, with which the fluid passageway closure means is used, in which the fluid passageway closure means comprises a body adapted to be removably mounted in a fluid passageway with which the fluid passageway closure means is used, in which said body comprises said throat section, characterised in which said body is provided with a flange at a second end thereof, which comprises an annular ring portion at an outer periphery thereof, which annular ring portion is axially disposed between said first end of the throat section and said second end of said body, in which a first screw thread is provided on an outer surface of said annular ring portion, in which the fluid passageway closure means comprises an end cap, in which said end cap is provided with a second screw thread adapted to co-operate with said first screw thread such that the end cap is removably mounted to the annular ring portion.

Therefore, the present invention provides a device which closes a fluid passageway until a probe means of a certain size is inserted therein. Such a device can be used to prevent the fuel tank inlet of a diesel vehicle being accessed when a petrol sized fuel pump nozzle is inserted therein, because it is too small to simultaneously operate all the trigger portions. In addition, the present invention provides such a device which can be retro-fitted to existing diesel vehicles, because the arrangement of the end cap screw thread axially alongside the throat section renders the device axially short, and therefore able to readily fit under the outer filler door of most existing diesel powered vehicles.

It will be appreciated that the invention can be used to prevent the opening of any type of fluid passageway, where it is desired to only allow this when a probe means of a certain size is inserted. The fluid passageway can be any size or shape, including a square cross-section, and it can be for any industrial purpose.

However, preferably the throat section can comprise a cylinder with a central axis, and the trigger portions can extend radially inwardly towards said central axis. The trigger portions can be circumferentially arranged about the throat section such that simultaneous radial outward depression of all the trigger portions is only possible by insertion into the throat section of said probe means.

Each lock arm can comprise a leaf spring member shaped to define an upper portion, said trigger portion extending therefrom, and a latch portion at a distal end of the trigger portion adapted to lock the door in the closed position. The leaf spring member can assume the lock position in a neutral state, and assume the release position in an extension state. It has been found that this particular construction is simple to manufacture, and works well. The leaf spring members flex at the upper portion when the trigger portions are depressed in use, which moves the latch portion away from the door to allow it to move to the open position.

The upper portion can be mounted to said throat section at said second end thereof, and the trigger portion can be shaped such that in the neutral state of the leaf spring member it extends through one of said openings. The latch portion can be a substantially "C" shaped portion such that in the neutral state of the leaf spring member it passes back through said opening and extends over an outer surface of the door, thereby to lock the door in the closed position. The leaf spring member can be constructed from a strip of spring steel, or similar, which is bent into the above described shape.

The trigger portion can be substantially straight, and in the neutral state of the leaf spring member it can extend radially inwardly towards said central axis of the cylinder at an angle. This facilitates a smooth and gradual flexing of the upper portion as the probe means travels down the length of the throat section.

Preferably the flange can extend perpendicular to said central axis.

With the above arrangement the manner in which the fluid passageway closure means can mount to a fluid passageway with which it is used can be as follows. The flange can be provided with one or more attachment lugs on an underside thereof, which attachment lugs can be adapted to co-operate with a fixture means provided on an inner surface of a fluid passageway with which the fluid passageway closure means is used. This construction has been found to work well in practice.

As referred to above, the invention is preferably for use with diesel motor vehicles, so in a preferred construction the fluid passageway closure means can be adapted to be used with the fuel tank inlet of a diesel motor vehicle, and the trigger portions can be spaced about the throat section such that simultaneous lateral outward depression of all the trigger portions is only possible by insertion into the throat section in use of a diesel fuel pump nozzle with a diameter of substantially 25mm.

The present invention can be performed in various ways, but one embodiment will now be described by way of example and with reference to the accompanying drawings, in which:
Figure 1 is a cross-sectional side view of a fluid passageway closure means which does not form a part of the present invention, in a first configuration;
Figure 2 is a cross-sectional side view of the fluid passageway closure means as shown in Figure 1 in a second configuration;
Figure 3 is a perspective view of a throat section component of the fluid passageway closure means as shown in Figure 1;
Figure 4 is a perspective view of the throat section component as shown in Figure 3;
Figure 5 is a side view of the throat section component as shown in Figure 3;
Figure 6 is a bottom view of the throat section component as shown in Figure 3; and
Figure 7 is a cross-sectional side view of a fluid passageway closure means according to the present invention.

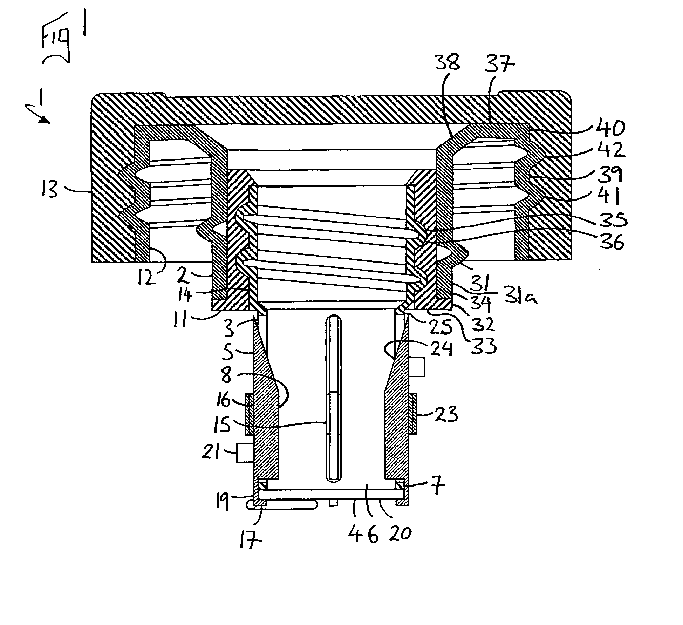

(The fluid passageway closure means shown in Figures 1 to 6, and as described in detail below, does not form a part of the present invention. This particular fluid passageway closure means was an early prototype constructed by the applicant which does not comprise the characterising features of the present invention. However, this fluid passageway closure means formed a part of the application as filed, and the full description thereof has been retained as it assists in the understanding of the present invention.)

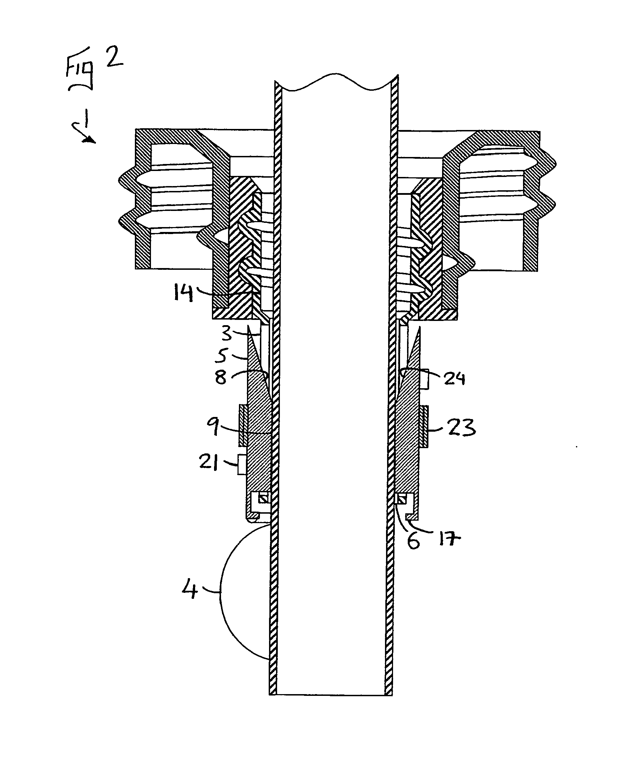

As shown in Figure 1 fluid passageway closure means, in the form of diesel fuel tank inlet closure means 1, comprises a body 2 adapted to be mounted in a diesel fuel tank inlet with which the fluid passageway closure means 1 is used, as described further below. Said body 2 comprises a throat section 3, a door 4 and a plurality of lock arms 5. The throat section 3 comprises an aperture 6 at a first end 7 thereof, and the door 4 is mounted over said aperture 7 and is movable between a closed position, as shown in Figure 1, and an open position, as shown in Figure 2. As explained further below the door 4 is spring loaded into said closed position.

The lock arms 5 are mounted to said throat section 3 and are movable between a lock position, as shown in Figure 1, in which they lock the door 4 in said closed position, and a release position, as shown in Figure 2, in which they allow the door 4 to move to said open position. Each lock arm 4 is biased into the lock position, and is provided with a trigger portion 8 extending laterally inwardly into the throat section 3. As is clear from Figure 2, lateral outward depression of each trigger portion 8 moves that lock arm 5 from the lock position to the release position.

As described further below, the trigger portions 8 are spaced about the throat section 3 such that simultaneous lateral outward depression of all the trigger portions 5 is only possible by insertion into the throat section 3 in use of a probe means, in the form of diesel fuel pump nozzle 9, of pre-determined outer dimensions, with which the fluid passageway closure means 1 is used.

The fluid passageway closure means 1 shown in the Figures comprises a number of separate components which are fitted together. In particular, the body 2 is made up of a central component 10, an adapter fitting 11, an outer component 12 and an end cap 13. The central component 10 comprises said throat section 3 and its associated parts, and a neck section 14. The adapter fitting 11 is fitted to the neck section 14, and in turn carries the outer component 12. The end cap 13 is fitted to the outer component 12. The reasons for this particular configuration are given below.

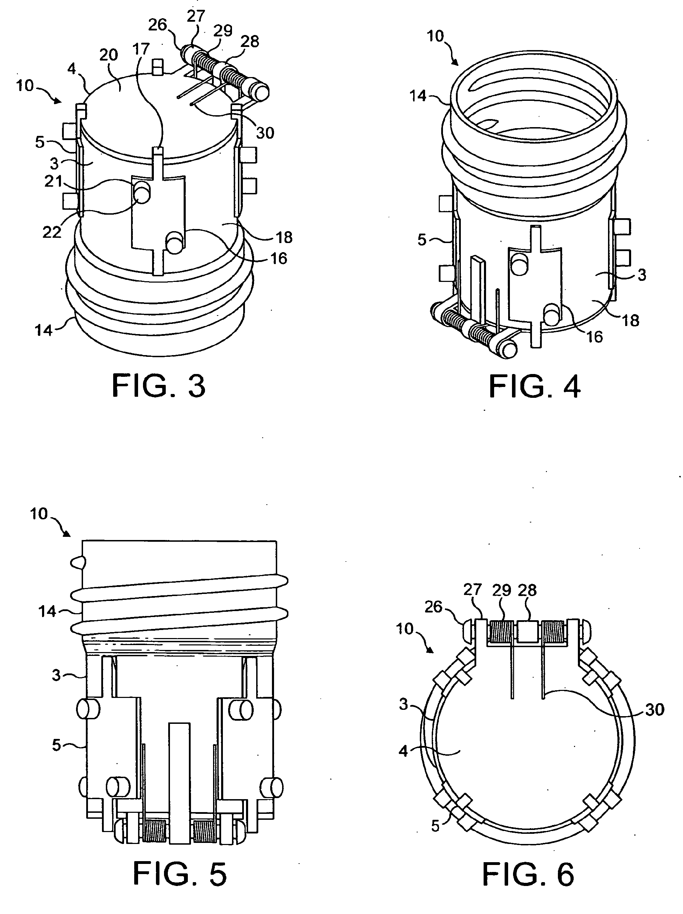

Figures 3 to 6 show the central component 10 in isolation. As is clear from Figures 3 to 6 the throat section 3 comprises a cylinder, which has a central axis. Four lock arms 5 are provided, and they are circumferentially arranged about the throat section 3 at 90 degree intervals. Referring back to Figure 1, the trigger portions 8 extend radially inwardly towards said central axis.

The throat section 3 comprises four axially extending openings 15, and each lock arm 5 comprises an arm portion 16, said trigger portion 8 and a latch 17. As is clear from Figures 3 to 6, the arm portions 16 are disposed at an outer surface 18 of the throat section 3, and as shown in Figure 1 the trigger portions 8 extending through said openings 15. The latches 17 are provided at first ends 19 of the arm portions 16, and they extend normally thereto, such that in the lock position they extend over an outer surface 20 of the door 4, and prevent it from opening.

As best seen in Figures 3 to 6, the outer surface 18 of the throat section 3 is provided with four pairs of axially spaced and circumferentially off-set mounting bosses 21. Each arm portion 16 comprise a corresponding pair of apertures 22 which are disposed on a pair of said mounting bosses 21. This construction is simple and expedient, and allows each lock arm 5 to be held securely in position on the outside of the throat section 3 while also allowing them to move radially away from the central axis. In addition this arrangement prevents any undesirable rotational movement of the lock arms 5.

A spiral leaf spring 23, which is only shown in Figures 1 and 2, is disposed around the outside of said arm portions 16, to bias the lock arms 6 into the lock position. The leaf spring 23 is positioned between the upper and lower mounting bosses 21 of each pair.

The trigger portions 8 comprise tapered sections 24 which decrease in size in the direction of a second end 25 of the throat section 3. This allows the probe means 9 to smoothly engage the lock arms 5 and move them steadily from the lock position to the release position.

Referring to Figure 3, the door 4 is mounted to the throat section with a spring loaded hinge comprising an axle 26, which is threaded through sleeves 27 provided on the door 4, and sleeve 28 which is integral to the central portion 10. Two coil springs 29 with opposed lever arms 30 extending onto the door 4 and the central component 10, are mounted on the axle 26 between the sleeves 27 and the sleeve 28, thereby to bias the door 4 into the closed position.

Referring back to Figure 1, a first screw thread 31 is provided on an outer surface 31a of the neck section 14. In practice the first screw thread 31 is provided as a part of the outer component 12, which is mounted to the adapter fitting 11, which is mounted to the neck section 14. The first screw thread 31 is of a pre-determined size and pitch, so that it co-operates with a particular screw thread provided on an inner surface of a diesel fuel tank inlet with which the fluid passageway closure means 1 is intended to be used.

The outer component 12 is removably fitted to the adapter fitting 11 via a friction fit. The adapter fitting 11 has a flange 32 at a first end 33 thereof, which abuts against a first end 34 of the outer component 12, such that the components are not axially movable in relation to one another. (Alternatively, the adapter fitting 11 can be glued to the outer component 12.)

The neck section 14 and the adapter fitting 11 are fitted together via cooperating screw threads 35 and 36.

Therefore, the central component 10 and the outer component 12 are removable from one another, either by removing the adapter fitting 11 from the central component 10, or by removing the outer component 12 from the adapter fitting 11. This allows different outer components 12 for use with different vehicles to be fitted to a standard central component 10. In particular, the particular outer component 12 used can be provided with a first screw thread 31 of the correct size and pitch for any given vehicle. In addition to this, the use of the three components 10-12 allows outer components 12 with differing diameters but the same wall thickness to be used, because adapter fittings 11 of different thickness can be used to support them. As such, the central component 10 can always be the same, and adapter fittings 11 and outer components 12 can be chosen according to the size, pitch and diameter of the screw thread required.

The simplest way to allow the outer component 12 to be removable from the central component 10 would be for the central component 10 to have a screw thread to which the outer component 12 could attach directly. However, this would mean that the outer component 12 would require a screw thread on the opposite side to the first screw thread 31, and it is in fact simpler from a manufacturing point of view to construct components comprising only one screw thread defined by undulations in the walls of the components, and the inclusion of the adapted fitting 11 facilitates this arrangement.

The outer component 12 comprises a flange 37 at a second end 38 thereof, which extends perpendicular to said central axis, and comprises an annular ring portion 39 at an outer periphery 40 thereof. The outer ring portion 39 carries a second screw thread 41.

As is clear from Figure 1 the end cap 13 comprises a third screw thread 42 which co-operates with said second screw thread 41 to allow the end cap 13 to be removably secured to the outer component 12. The point of this feature is to provide an end cap for a diesel fuel tank inlet to replace the standard component which can no longer be fitted once the fluid passageway closure means 1 is fitted in the inlet.

As referred to above, the fluid passageway closure means 1 is for use with diesel motor vehicles, so the trigger portions 8 are spaced about the throat section 3 such that simultaneous lateral outward depression of all the trigger portions 8 is only achievable by the insertion into the throat section 3 a diesel fuel pump nozzle 9 with a diameter of 25mm. In fact, the internal diameter of the throat section 3 is 25.8mm, in order to provide a degree of clearance.

Therefore in use the fluid passageway closure means 1 operates as follows. First of all a fluid passageway closure means 1 is constructed which is suitable for a pre-determined vehicle. In particular a fitting adapter 11 and outer component 12 are used which will co-operate with that particular vehicle.

To fit the fluid passageway closure means 1 the filler cap of the vehicle with which it is used is removed from the fuel tank inlet, and the fluid passageway closure means 1 is introduced thereto.

The first screw thread 31 co-operates with the screw thread in the fuel tank inlet, and the fluid passageway closure means 1 is rotated until it is safely secured therein. As such, the throat section 3 extends into the fuel tank inlet and the door 4 effectively closes it. The door 4 is locked shut by the lock arms 5.

When fuel is to be provided to the tank of the vehicle, the end cap 13 is removed, and the diesel fuel pump nozzle 9 is introduced into the throat section 3, via the neck section 14. When the 25mm wide nozzle 9 meets the trigger portions 8, it forces them radially outwards against the force of the spiral leaf spring 23. The tapered sections 24 ensure that this action is performed smoothly, and the mounting bosses 21 ensure that the lock arms 5 move in a uniform outward radial direction.

When this action is performed the latches 17 slide away from the outer surface 20 of the door 4, effectively unlocking it. When the nozzle 9 reaches the door 4 it pushes it open, against the force of the coil springs 29. The diesel fuel pump nozzle 9 has then gained access to the fuel tank, and fuel delivery can commence.

When the nozzle 9 is removed after the tank is filled, the above described action is performed in reverse. As the nozzle 9 withdraws from the aperture 6 the door 4 is forced closed by the coil springs 29. As the nozzle 9 withdraws from the throat section 3 the lock arms 5 are forced back into the lock position by the spiral leaf spring 23, locking the door 4 once more. Once the nozzle 9 is fully removed the end cap 13 can be replaced.

If a fuel pump nozzle of a smaller diameter, in particular a petrol pump nozzle of 20mm diameter, is introduced to the throat section 3 by mistake, the door 4 will not be unlocked because the smaller nozzle will not be able to simultaneously depress all the trigger portions 8, and allow the door 4 to be unlocked. In fact, the gap between the trigger portions 8 is substantially 20mm, so a petrol nozzle could slide up to the door 4, but the door 4 will not open. One of the lock arms 5 could be depressed by forcing the petrol nozzle against it, but not all four. (In fact, the spiral leaf spring 23 keeps the lock arms 5 in the lock position shown in Figure 1 and the petrol nozzle is held in a central position in the throat section 3.) As such, the door 4 will always remain locked, preventing the petrol pump nozzle from gaining access to the tank.

If it is desired to remove the fluid passageway closure means 1 from the vehicle at any time, it can simply be unscrewed from the fuel tank inlet in a reverse of the above described fitting procedure.

It is possible in use to remove the outer component 12 from the central component 10, and replace it with another comprising a first screw thread of different characteristics adapted for use with a different motor vehicle. As such, the fluid passageway closure means 1 has a modular capability and can readily be used with different types of vehicles.

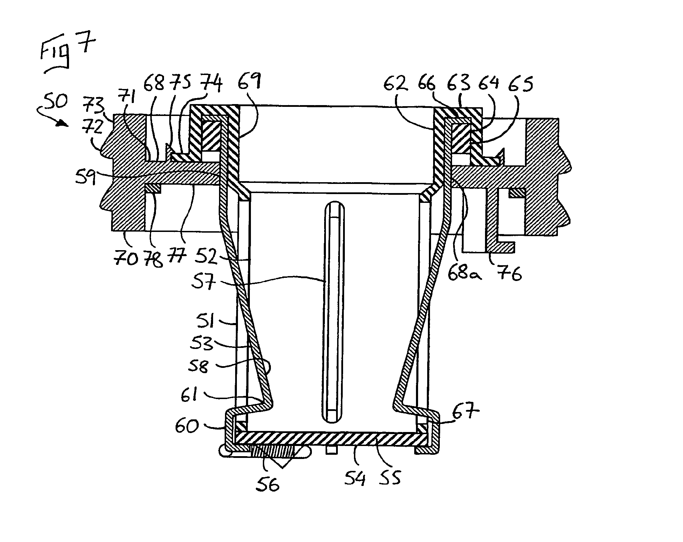

Figure 7 shows a fluid passageway closure means 50 according to the present invention, which works in a similar way to fluid passageway closure means 1 described above, but with a number of differences in its manner of construction and function.

As with fluid passageway closure means 1 described above, fluid passageway closure means 50 comprises a body 51 adapted to be mounted in a diesel fuel tank inlet with which the fluid passageway closure means 50 is used. The body 51 comprises a throat section 52, four lock arms 53, and a door 54 which opens and closes an aperture 55. The door 54 is spring loaded into a closed position by a coil spring 56. The throat section 52 comprises a cylinder with a central axis, and the four lock arms 53 are circumferentially arranged about the throat section 52 at 90 degree intervals.

As above, the throat section 52 comprises four axially extending openings 57, and each lock arm 53 comprises a trigger portion 58 extending laterally inwardly into the throat section 52 through an opening 57, and lateral outward depression of each trigger portion 58 moves that lock arm 53 from a lock position as shown in Figure 7, to a release position, in which the door 54 can be moved into an open position. The trigger portions 58 are spaced about the throat section 52 such that simultaneous lateral outward depression of all the trigger portions 58 is only possible by insertion into the throat section 52 of diesel fuel pump nozzle.

However, unlike in fluid passageway closure means 1, the lock arms 53 each comprise leaf spring member, which is constructed from a strip of spring steel bent into the shape shown in Figure 7. Each lock arm 53 comprises an upper portion 59, said trigger portion 58 extending therefrom, and a latch portion 60 disposed at a distal end 61 of the trigger portion 58, and adapted to lock the door 54 in the closed position. The latch portions 60 are substantially "C" shaped, such that they extend from the distal end 61 of the trigger portions back through said openings 57, and then over the door 54.

The throat section 52 comprises a neck section 62 comprising a flange portion 63 which is shaped to define an annular housing 64. The upper portions 59 are mounted inside said annular housing 64, and are secured in position by a lock ring 65. The upper portions 59 comprise a tab 66 which is disposed above said lock ring 65, to prevent any axial movement of the lock arms 53. With this arrangement the upper portions 59 are mounted parallel to the central axis of the throat section 52, and therefore in the neutral, unextended state as shown in Figure 7, the lock arms 53 assume the lock position with the trigger portions 58 extending laterally inwardly into the throat section 52. The lock arms 53 must therefore be placed under extension to move them into the release position, and therefore the lock arms 53 are "biased" into the lock position. When the lock arms 53 are laterally depressed by a diesel fuel nozzle placed into the throat section 52 in use, they flex at the upper portion 59, and the latch portions 60 rotate away from the door 54 to allow it to be moved to the open position.

As is clear from Figure 7 the trigger portions 58 are straight, and as such the degree the trigger portions 58 extend laterally inwardly towards said central axis of the throat section 52 increases towards a first end 67 thereof. This facilitates a smooth and gradual flexing of the upper portions 59 as a diesel nozzle travels down the length of the throat section 52 in use.

The manner in which fluid passageway closure means 50 provides for an end cap (not shown) is also different to how this is achieved with fluid passageway closure means 1. The body 51 is provided with a flange 68 at a second end 69 thereof, which extends perpendicular to said central axis, and comprises an annular ring portion 70 at an outer periphery 71 thereof.

A first screw thread 72 is provided on an outer surface 73 of said annular ring portion 70, which is adapted to co-operate with a second screw thread provided on an end cap (not shown), in a similar manner to in first fluid passageway closure means 1.

The flange 68 is shaped such that it extends right up to the upper portions 59 of the lock arms 53, which serves to close the annular housing 64. This secures the lock ring 65 inside the annular housing 64, and therefore also the upper portions 59 of the lock arms 53. In addition, the inner end 68a of the flange 68 serves as a point of rotation against which the upper portions 59 of the lock arms 53 can flex in use.

The flange portion 63 of the neck section 62 comprises an outer flange portion 74. The flange 68 is provided with snap-fit locking tabs 75, which secure said outer flange portion 74 to the flange 68, and therefore fixes the throat section 52 and the flange 68 together.

The manner in which the fluid passageway closure means 50 mounts to a fluid passageway with which it is used is also different to how this is achieved with fluid passageway closure means 1. The flange 68 is provided with two attachment lugs (only one of which 76 is visible) on an underside 77 thereof. These lugs 76 are adapted to co-operate with a mounting lip provided on an inner surface of a diesel fuel tank inlet aperture (not shown) with which the fluid passageway closure means 50 is used. (It will be appreciated that different vehicles will have slightly different fixtures at the fuel tank inlet aperture, and as such the flange 68 can be provided with appropriately shaped and positioned lugs 76 as required. As such, it is only necessary to produce varied flanges 68 to allow for different vehicle specific devices, and the rest of the parts of fluid passageway closure means 50 can remain standard.)

The flange 68 is also provided with a fluid seal 78 on an underside thereof, which provides a fluid seal with said diesel fuel tank inlet aperture in use.

In use the fluid passageway closure means 50 operates in the same way as fluid passageway closure means 1 described above. It is fitted into a diesel fuel tank inlet aperture, and the end cap (not shown) operates as the end cap for said diesel fuel tank. When diesel fuel has to be pumped into said fuel tank, the end cap (not shown) is removed, and a diesel fuel nozzle is introduced into the throat section 52. The nozzle forces the trigger portions 58 outwards, which releases the latch portions 60 from the door 54, which can then be pushed open against the force of the spring 56. If a petrol nozzle is inadvertently introduced into the throat section 52 in use, one or more of the trigger portions 58 will not be forced outwards due to the smaller size of the petrol nozzle, and the door 54 will remain locked, preventing any petrol from being pumped into the diesel fuel tank.

When sufficient diesel fuel has been pumped into the diesel fuel tank the diesel nozzle is removed from the throat section 52. First the door 54 closes, and then the lock arms 53 move back into the lock position. The end cap (not shown) can then be fixed to the flange 68.

Therefore, a device is provided which prevents the input of petrol into the tanks of diesel motor vehicles. In addition, the invention provides a device which can be retro-fitted to existing diesel vehicles, because the arrangement of the end cap screw thread axially alongside the throat section renders the device axially short, and therefore able to readily fit under the outer filler door of most existing diesel powered vehicles.

## Claims

1. Fluid passageway closure means (50) comprising a throat section (52), a door (54) and a plurality of lock arms (53), in which the throat section (52) comprises an aperture (55) at a first end thereof, in which the door (54) is mounted over said aperture (55) and is movable between a closed position and an open position, in which the door (54) is spring loaded into said closed position, in which the lock arms (53) are mounted to said throat section (52) and are movable between a lock position in which they lock the door (54) in said closed position, and a release position in which they allow the door (54) to move to said open position, in which each lock arm (53) is biased into the lock position, in which each lock arm (53) is provided with a trigger portion (58) extending laterally inwardly into the throat section (52), in which lateral outward depression of each trigger portion (58) moves that lock arm (53) from the lock position to the release position, and in which the trigger portions (58) are spaced about the throat section (52) such that simultaneous lateral outward depression of all the trigger portions (58) is only possible by insertion into the throat section (52) in use of a probe means of pre-determined outer dimensions, with which the fluid passageway closure means (50) is used, in which the fluid passageway closure means (50) comprises a body (51) adapted to be removably mounted in a fluid passageway with which the fluid passageway closure means (50) is used, in which said body (51) comprises said throat section (52),
**characterised in** which said body (51) is provided with a flange (68) at a second end (69) thereof, which comprises an annular ring portion (70) at an outer periphery (71) thereof, which annular ring portion (70) is axially disposed between said first end of the throat section (52) and said second end (69) of said body (51), in which a first screw thread (72) is provided on an outer surface (73) of said annular ring portion (70), in which the fluid passageway closure means (50) comprises an end cap, in which said end cap is provided with a second screw thread adapted to co-operate with said first screw thread (72) such that the end cap is removably mounted to the annular ring portion (70).

2. Fluid passageway closure means (50) as claimed in Claim 1 in which the throat section (52) comprises a cylinder with a central axis, in which the trigger portions (58) extend radially inwardly towards said central axis, and in which the trigger portions (58) are circumferentially arranged about the throat section (52) such that simultaneous radial outward depression of all the trigger portions (58) is only possible by insertion into the throat section (52) of said probe means.

3. Fluid passageway closure means as claimed in Claim 2 in which the throat section (52) comprises a plurality of axially extending openings (57), in which each lock arm (53) comprises a leaf spring member shaped to define an upper portion (59), said trigger portion (58) extending therefrom, and a latch portion (60) at a distal end (61) of the trigger portion (58) adapted to lock the door (54) in the closed position, and in which the leaf spring member assumes the lock position in a neutral state, and assumes the release position in an extension state.

4. Fluid passageway closure means (50) as claimed in Claim 3 in which the upper portion (59) is mounted to said throat section (52) at said second end (69) thereof, in which the trigger portion (58) is shaped such that in the neutral state of the leaf spring member it extends through one of said openings (57), and in which the latch portion (60) is a substantially "C" shaped portion such that in the neutral state of the leaf spring member it passes back through said opening (57) and extends over an outer surface of the door (54), thereby to lock the door (54) in the closed position.

5. Fluid passageway closure means (50) as claimed in Claim 4 in which the trigger portion (58) is substantially straight, and in the neutral state of the leaf spring member extends radially inwardly towards said central axis of the cylinder at an angle.

6. Fluid passageway closure means (50) as claimed in any of Claims 3 to 5 in which four lock arms (53) are provided, and in which said lock arms (53) are arranged at substantially 90 degree intervals.

7. Fluid passageway closure means (50) as claimed in any of Claims 3 to 6 in which said flange (68) extends perpendicular to said central axis.

8. Fluid passageway closure means (50) as claimed in Claim 7 in which said flange (68) is provided with one or more attachment lugs (76) on an underside (77) thereof, which attachment lugs (76) are adapted to co-operate with a fixture means provided on an inner surface of a fluid passageway with which the fluid passageway closure means (50) is used.

9. Fluid passageway closure means (50) as claimed in any of the preceding Claims in which the fluid passageway closure means (50) is adapted to be used with the fuel tank inlet of a diesel motor vehicle, in which the trigger portions (58) are spaced about the throat section (52) such that simultaneous lateral outward depression of all the trigger portions (58) is only possible by insertion into the throat section (52) in use of a diesel fuel pump nozzle with a diameter of substantially 25mm.

## Patentansprüche

1. Fluidkanalverschlussmittel (50) umfassend einen Halsbereich (52), eine Tür (54) und eine Vielzahl von Verriegelungsarmen (53), wobei der Halsbereich (52) an einem ersten Ende eine Öffnung (55) umfasst, wobei die Tür (54) über der Öffnung (55) montiert und zwischen einer geschlossenen Position und einer offenen Position bewegbar ist, wobei die Tür (54) in die geschlossene Position federvorgespannt ist, wobei die Verriegelungsarme (53) an dem Halsbereich (52) montiert und zwischen einer Verriegelungsposition, in der sie die Tür (54) in der geschlossenen Position verriegeln, und einer Entriegelungsposition, in der sie der Tür (54) erlauben, sich in die offene Position zu bewegen, bewegbar sind, wobei jeder Verriegelungsarm (53) in die Verrieglungsposition vorgespannt ist, wobei jeder Verriegelungsarm (53) mit einem sich seitlich nach innen in den Halsbereich (52) erstreckenden Trigger-Teil (58) versehen ist, wobei ein seitlich nach außen gerichtetes Eindrücken jedes Trigger-Teils (58) den Verriegelungsarm (53) von der Verriegelungsposition in die Entriegelungsposition bewegt, und wobei die Trigger-Teile (58) über den Halsbereich (52) verteilt sind, so dass ein simultanes seitlich nach außen gerichtetes Eindrücken aller Trigger-Teile (58) nur durch Einführen eines Probemittels von vorgegebenen Außenabmessungen, mit dem das Fluidkanalverschlussmittel (50) benutzt wird, in den Halsbereich (52) möglich ist, wobei das Fluidkanalverschlussmittel (50) einen Körper (51) umfasst, der zum lösbaren Montieren in einen Fluidkanal, mit dem das Fluidkanalverschlussmittel (50) benutzt wird, angepasst ist, wobei der Körper (51) den Halsbereich (52) umfasst, **dadurch gekennzeichnet, dass** der Körper (51) an einem zweiten Ende (69) mit einem Flansch (68) versehen ist, der an einer äußeren Begrenzungsfläche (71) ein kreisförmiges Ringteil (70) umfasst, wobei das kreisförmige Ringteil (70) axial zwischen dem ersten Ende des Halsbereichs (52) und dem zweiten Ende (69) des Körpers (51) angeordnet ist, wobei ein erstes Schraubengewinde (72) an einer äußeren Oberfläche (73) des kreisförmigen Ringteils (70) ausgebildet ist, wobei das Fluidkanalverschlussmittel (50) eine Endkappe umfasst, die mit einem mit dem ersten Schraubengewinde (72) kooperierenden zweiten Schraubengewinde versehen ist, so dass die Endkappe lösbar an dem kreisförmigen Ringteil (70) montiert ist.

2. Fluidkanalverschlussmittel (50) nach Anspruch 1, wobei der Halsbereich (52) einen Zylinder mit einer zentralen Achse umfasst, wobei sich die Trigger-Teile (58) sich radial nach innen in Richtung der zentralen Achse erstrecken, und wobei die Trigger-Teile (58) ringsum über den Halsbereich (52) angeordnet sind, so dass ein simultanes radial nach außen gerichtetes Eindrücken aller Trigger-Teile (58) nur durch Einsetzen des Probemittels in den Halsbereich (52) möglich ist.

3. Fluidkanalverschlussmittel nach Anspruch 2, wobei der Halsbereich (52) eine Vielzahl von sich axial erstreckenden Öffnungen (57) umfasst, wobei jeder Verriegelungsarm (53) ein zur Festlegung eines oberen Bereichs (59) ausgeformtes Blattfederbauteil, von dem sich der Trigger-Teil (58) erstreckt, und einen zum Verriegeln der Tür (54) in der geschlossenen Position angepassten Verschlussbereich (60) an einem entfernten Ende (61) des Trigger-Teils (58) umfasst, und wobei das Blattfederbauteil die Verriegelungsposition in einem neutralen Zustand und die Entriegelungsposition in einem gedehnten Zustand annimmt.

4. Fluidkanalverschlussmittel (50) nach Anspruch 3, wobei der obere Bereich (59) an dem zweiten Ende (69) des Halsbereichs (52) montiert ist, wobei der Trigger-Teil (58) so ausgeformt ist, dass er sich in dem neutralen Zustand des Blattfederbauteils durch eine der Öffnungen (57) erstreckt, und wobei der Verschlussbereich (60) ein im Wesentlichen C-förmiger Bereich ist, so dass er in dem neutralen Zustand des Blattfederbauteils durch die Öffnung (57) zurück reicht und sich über eine äußerer Oberfläche der Tür (54) erstreckt, wodurch die Tür (54) in der geschlossenen Position verriegelt wird.

5. Fluidkanalverschlussmittel (50) nach Anspruch 4, wobei der Trigger-Teil (58) im Wesentlichen gerade ist und sich im neutralen Zustand des Blattfederbauteils in einem Winkel radial nach innen in Richtung der zentralen Achse des Zylinders erstreckt.

6. Fluidkanalverschlussmittel (50) nach einem der Ansprüche 3 bis 5, wobei vier Verriegelungsarme (53) vorgesehen sind, und wobei die Verriegelungsarme (53) in Intervallen von im Wesentlichen 90 Grad angeordnet sind.

7. Fluidkanalverschlussmittel (50) nach einem der Ansprüche 3 bis 6, wobei sich der Flansch (68) rechtwinklig zu der zentralen Achse erstreckt.

8. Fluidkanalverschlussmittel (50) nach Anspruch 7, wobei der Flansch (68) an einer Unterseite (77) mit einem oder mehreren Halterungsbügeln (76) versehen ist, wobei die Halterungsbügel (76) zum Zusammenwirken mit an einer inneren Oberfläche eines Fluidkanals, mit dem das Fluidkanalverschlussmittel (50) benutzt wird, vorgesehenen Befestigungsmitteln angepasst sind.

9. Fluidkanalverschlussmittel (50) nach einem der vorhergehenden Ansprüche, wobei das Fluidkanalverschlussmittel (50) zur Nutzung mit dem Treibstofftank-Einlass eines Dieselmotor-Fahrzeugs angepasst ist, wobei die Trigger-Teile (58) derart über den Halsbereich (52) verteilt sind, dass ein simultanes seitlich nach außen gerichtetes Eindrücken aller Trigger-Teile (58) nur durch Einführen eines Mündungsstückes einer Diesel-Treibstoffpumpe mit einem Durchmesser von im Wesentlichen 25mm in den Halsbereich (52) möglich ist.

## Revendications

1. Moyens de fermeture de passage de fluide (50) comprenant une section de gorge (52), une porte (54) et une pluralité de bras de verrouillage (53), dans lesquels la section de gorge (52) comprend une ouverture (55) sa première extrémité, dans lesquels la porte (54) est montée sur ladite ouverture (55) et est mobile entre une position fermée et une position ouverte, dans lesquels la porte (54) est sollicitée par ressort dans ladite position fermée, dans lesquels les bras de verrouillage (53) sont montés sur ladite section de gorge (52) et sont mobiles entre une position de verrouillage dans laquelle ils verrouillent la porte (54) dans ladite position fermée, et une position de déblocage, dans laquelle ils permettent à la porte (54) de passer dans ladite position ouverte, dans lesquels chaque bras de verrouillage (53) est sollicité dans la position de verrouillage, dans lesquels chaque bras de verrouillage (53) est doté d'une partie de gâchette (58) s'étendant latéralement vers l'intérieur dans la section de gorge (52), dans lesquels un enfoncement latéral externe de chaque partie de gâchette (58) fait passer le bras de verrouillage (53) de la position de verrouillage à la position de déblocage, et dans lesquels les parties de gâchette (58) sont espacées autour de la section de gorge (52) de sorte que l'enfoncement latéral simultané vers l'extérieur de toutes les parties de gâchette (58) est uniquement possible par 1' insertion, dans la section de gorge (52), à l'usage, de moyens de sonde de dimensions externes prédéterminées, avec lesquels les moyens de fermeture de passage de fluide (50) sont utilisés, dans lesquels les moyens de fermeture de passage de fluide (50) comprennent un corps (51) adapté pour être monté de manière amovible dans un passage de fluide avec lequel les moyens de fermeture de passage de fluide (50) sont utilisés, dans lesquels ledit corps (51) comprend ladite section de gorge (52),
**caractérisés en ce que** ledit corps (51) comporte une bride (68) à sa seconde extrémité (69), qui comprend une partie de bague annulaire (70) sur sa périphérie externe (71), laquelle partie de bague annulaire (70) est disposée de manière axiale entre ladite première extrémité de la section de gorge (52) et ladite seconde extrémité (69) dudit corps (51), dans lesquels un premier filetage de vis (72) est prévu sur une surface externe (73) de ladite partie de bague annulaire (70), dans lesquels les moyens de fermeture de passage de fluide (50) comprennent un capuchon d'extrémité, dans lesquels ledit capuchon d'extrémité comporte un second filetage de vis adapté pour coopérer avec ledit premier filetage de vis (72) de sorte que le capuchon d'extrémité est monté de manière amovible sur la partie de bague annulaire (70).

2. Moyens de fermeture de passage de fluide (50) selon la revendication 1, dans lesquels la section de gorge (52) comprend un cylindre avec un axe central, dans lesquels les parties de gâchette (58) s'étendent radialement vers l'intérieur vers ledit axe central, et dans lesquels les parties de gâchette (58) sont circonférentiellement agencées autour de la section de gorge (52) de sorte que l'enfoncement radial simultané vers l'extérieur de toutes les parties de gâchette (58) est uniquement possible par l'insertion dans la section de gorge (52) desdits moyens de sonde.

3. Moyens de fermeture de passage de fluide selon la revendication 2, dans lesquels la section de gorge (52) comprend une pluralité d'ouvertures (57) s'étendant de manière axiale, dans lesquels chaque bras de verrouillage (53) comprend un élément de ressort à lame formé pour définir une partie supérieure (59), ladite partie de gâchette (58) s'étendant à partir de cette dernière, et une partie de verrou (60) à une extrémité distale (61) de la partie de gâchette (58) étant adaptée pour verrouiller la porte (54) dans la position fermée et dans lesquels l'élément de ressort à lame prend la position fermée dans un état neutre, et prend la position de déblocage dans un état d'extension.

4. Moyens de fermeture de passage de fluide (50) selon la revendication 3, dans lesquels la partie supérieure (59) est montée sur ladite section de gorge (52) à sa dite seconde extrémité (69), dans lesquels la partie de gâchette (58) est formée de sorte que, à l'état neutre de l'élément de ressort à lame, elle s'étend à travers l'une desdites ouvertures (57), et dans lesquels la partie de verrouillage (60) est une partie sensiblement en forme de « C » de sorte qu'à l'état neutre de l'élément de ressort à lame, elle repasse par ladite ouverture (57) et s'étend sur une surface externe de la porte (54), pour verrouiller ainsi la porte (54) dans la position fermée.

5. Moyens de fermeture de passage de fluide (50) selon la revendication 4, dans lesquels la partie de gâchette (58) est sensiblement droite, et à l'état neutre de l'élément de ressort à lame, s'étend radialement vers l'intérieur vers ledit axe central du cylindre selon un angle.

6. Moyens de fermeture de passage de fluide (50) selon les revendications 3 à 5, dans lesquels on prévoit quatre bras de verrouillage (53), et dans lesquels lesdits bras de verrouillage (53) sont agencés sensiblement à des intervalles de 90 degrés.

7. Moyens de fermeture de passage de fluide (50) selon l'une quelconque des revendications 3 à 6, dans lesquels ladite bride (68) s'étend perpendiculairement audit axe central.

8. Moyens de fermeture de passage de fluide (50) selon la revendication 7, dans lesquels ladite bride (68) comporte une ou plusieurs pattes de fixation (76) sur sa face inférieure (77), lesquelles pattes de fixation (76) sont adaptées pour coopérer avec des moyens d'installation fixes prévus sur une surface interne d'un passage de fluide avec lesquels les moyens de fermeture de passage de fluide (50) sont utilisés.

9. Moyens de fermeture de passage de fluide (50) selon l'une quelconque des revendications précédentes, dans lesquels les moyens de fermeture de passage de fluide (50) sont adaptés pour être utilisés avec une entrée de réservoir de carburant d'un véhicule à moteur diesel, dans lesquels les parties de gâchette (58) sont espacées autour de la section de gorge (52) de sorte que l'enfoncement latéral simultané vers l'extérieur de toutes les parties de gâchette (58) est uniquement possible par l'insertion dans la section de gorge (52), à l'usage, d'une buse de pompe à gasoil avec un diamètre sensiblement de 25 mm.
